# EUROPÄISCHE PATENTSCHRIFT

(11) **EP 1 006 691 B1**
(45) Veröffentlichungstag und Bekanntmachung des Hinweises auf die Patenterteilung: **13.04.2005**
(21) Anmeldenummer: 99120362.1
(22) Anmeldetag: 13.10.1999
(51) Int. Cl.: H04L 12/40, H04L 29/06

(54) **Verfahren und Vorrichtung zur Anpassung von busfähigen Geräten and das von einer sendenden Station verwendete Datenübertragungsprotokoll**
Method of adapting bus devices to a data transmission protocol used by a transmitting station
Procédé d'adaptation des stations de bus à un protocole de transmission de donneés utilisé par une station de transmission

(30) Priorität: 16.10.1998 DE 19847701
(43) Veröffentlichungstag der Anmeldung: 07.06.2000
(73) Patentinhaber: Pepperl + Fuchs GmbH, 68307 Mannheim (DE)
(72) Erfinder: Kessler, Michael, 69514 Laudenbach (DE)
(74) Vertreter: Mierswa, Klaus, Dipl.-Ing.

(56) Entgegenhaltungen:
- EP-A- 0 598 510
- GB-A- 2 288 954
- US-A- 5 787 248
- "GIGABIT SPEED MULTI-PROTOCOL CHIP AND ADAPTERS FOR NETWORK COMPUTING" IBM TECHNICAL DISCLOSURE BULLETIN, IBM CORP. NEW YORK, US, Bd. 40, Nr. 10, 1. Oktober 1997 (1997-10-01), Seiten 13-15, XP000739405 ISSN: 0018-8689

## Beschreibung

### Technisches Gebiet:

Die Erfindung betrifft ein Verfahren zur automatischen Anpassung von busfähigen Geräten an das von einer sendenden Station verwendete Datenübertragungsprotokoll, bei welchem in einer ersten Phase, der Identifikationsphase, die Kommunikation bzw. Datenstruktur auf dem Bus beobachtet und die Art des verwendeten Protokolls ermittelt wird, wobei Datentelegramme empfangen und hinsichtlich charakteristischer Merkmale analysiert werden, und danach in einer Kommunikationsphase die Kommunikation mit der sendenden Station und/oder die Datenauswertung unter Verwendung des identifizierten Protokolls und/oder über die identifizierte Schnittstelle eingeleitet und aufgenommen wird gemäß dem Oberbegriff von Anspruch 1.

### Stand der Technik:

Zum Austausch von Daten zwischen einer Mehrzahl von Geräten z.B. Sensoren, Datenverarbeitungseinrichtungen, Ein-/Ausgabeeinheiten oder zum Datenaustausch zwischen verschiedenen funktionellen Einheiten innerhalb desselben Geräts oder zum Auslesen einer Mehrzahl von Speicherplätzen, werden gegenwärtig Bussysteme verwendet, bei welchen nicht jedes Element mit jedem anderen direkt über eine Datenleitung gekoppelt ist, sondern die Datenübertragung über eine gemeinsame Leitung stattfindet, an welche jedes Element angeschlossen ist. Um sicherzustellen, dass nur das jeweils anzusprechende Element die Daten empfängt, werden die zu übertragenden Daten vom sendenden Element mit Hilfe eines Busprogramms in ein Datentelegramm umgewandelt, welches bestimmte Steuer- und Kontrollsequenzen enthält. Das Datentelegramm wird auf den Bus gegeben und kann somit prinzipiell von jedem an den Datenbus angeschlossenen Element empfangen werden. Auf einer unteren Kommunikationsschicht prüft ein Element, das ein Datentelegramm empfangen hat, anhand der Steuersequenzen, ob dieses Datentelegramm für die betreffende Station bestimmt ist. Ist dies der Fall, wird das Datentelegramm mit Hilfe des Programms, welches zu dem zum Aussenden der Daten verwendeten Busprogramm passen muß, von den Steuer und Kontrollsequenzen befreit, so dass nunmehr die nackten Daten wieder zur Verfügung stehen und in der empfangenden Station auch weiterverarbeitet werden können. Die Kontrollsequenzen des Datentelegramms ermöglichen eine Kontrolle, ob das gesendete Datenpaket vollständig empfangen wurde oder ob bei der Übertragung auf den Datenbus Fehler aufgetreten sind.

Um eine Datenübertragung auf einen Datenbus zu ermöglichen, müssen die von den angeschlossenen Stationen verwendeten Datenübertragungsprotokolle miteinander übereinstimmen. Anderenfalls ist die empfangende Station nicht in der Lage, die Daten, welche die Signalisierungs- und Steuerinformation tragen, von denjenigen zu unterscheiden, welche die zu übermittelnde Information beinhalten.

Gegenwärtig sind eine Mehrzahl von Busprogrammen mit verschiedenen Datenverarbeitungsprotokollen im Einsatz, z.B. Profibus PA, Foundation Field Bus, World FIP, CAN und SDS. Diese Busprotokolle werden vom Hersteller eines busfähigen Geräts meistens fest installiert, z.B. bei busfähigen Sensorsystemen, wobei das die Meßdaten empfangende und auswertende Gerät an das verwendete Übertragungsprotokoll angepaßt werden muß. Dies geschieht, indem das entsprechende Busprogramm auch auf dem auswertenden Gerät fest installiert wird. Dazu muß allerdings das verwendete Busprogramm bei der Installation bekannt sein. Das gleiche Problem, nämlich den verwendeten Bus festzustellen und das Gerät daran anzupassen, stellt sich auch bei der Erweiterung eines bereits existierenden Kommunikationsnetzes um weitere Geräte.

Zum Anpassen eines busfähigen Geräts an das verwendete Protokoll ist es bekannt, das Busprogramm im Gerät auszutauschen. Dieser Austausch kann jedoch in der Regel nicht vom Benutzer des Geräts selbst vorgenommen werden, sondern muß vom Hersteller des Geräts durchgeführt werden. Der Hersteller muß also verschiedene Geräteversionen die an das bereits existierende Kommunikationsnetz beim Kunden angepaßt sind, entwickeln, auf Lager haben und diese liefern. Ebenso ist es bisher bekannt, die Baudrate automatisch zu erkennen und somit die Übertragungsgeschwindigkeit auf einer Datenleitung zu diagnostizieren.

Durch die EP 0 598 510 A2 ist ein Verfahren zur automatischen Anpassung von busfähigen Geräten an das von einer sendenden Station verwendete Datenübertragungsprotokoll bekannt geworden, bei welchem in einer Identifikationsphase, die Datenstruktur auf dem Bus beobachtet und die Art des verwendeten Protokolls ermittelt wird, wobei Datentelegramme empfangen und hinsichtlich charakteristischer Merkmale analysiert werden. Danach wird in einer Kommunikationsphase die Kommunikation mit der sendenden Station und/oder die Datenauswertung unter Verwendung des identifizierten Protokolls über die identifizierte Schnittstelle eingeleitet und aufgenommen.

Des Weiteren ist durch die Literaturstelle Gigabit Speed Multi-Protocol Chip and Adapters for Network Computing XP-000739405 in IBM Technical Disclosure Bulletin, vol. 40 No.10 October 1997 ein ähnliches Verfahren wie das vorgenannte Verfahren bekannt geworden.

### Technische Aufgabe:

Der Erfindung liegt die Aufgabe zugrunde ein Verfahren sowie eine Vorrichtung zur automatischen Anpassung von busfähigen Geräten an das in einem Kommunikationsnetzwerk verwendete Datenübertragungsprotokoll zur Verfügung zu stellen, damit ein flexibler, universeller und bedienerfreundlicher Einsatz von busfähigen Geräten ermöglicht wird.

### Offenbarung der Erfindung und deren Vorteile:

Die Lösung der Aufgabe besteht erfindungsgemäß darin, dass sich an die Identifikationsphase eine Testphase anschließt, in welcher die Kommunikation bzw. Datenstruktur auf dem Bus beobachtet und geprüft wird, ob die Datenstruktur mit dem in der Identifikationsphase identifizierten Datenübertragungsprotokoll übereinstimmt, wobei die Identifikationsphase wiederaufgenommen wird, falls in der Testphase Abweichungen der empfangenen Datenstruktur von der Soll-Datenstruktur bei Verwendung des identifizierten Datenübertragungsprotokolls festgestellt werden, und ansonsten zur Kommunikationsphase übergegangen wird.

Es schließt sich somit an die Identifikationsphase eine Testphase an, in welcher die Kommunikation bzw. Datenstruktur auf dem Bus beobachtet und geprüft wird, ob die Datenstruktur mit dem in der Identifikationsphase identifizierten Datenübertragungsprotokoll übereinstimmt, wobei die Identifikationsphase wiederaufgenommen wird, falls in der Testphase Abweichungen der empfangenen Datenstruktur von der Soll-Datenstruktur bei Verwendung des identifizierten Datenübertragungsprotokolls festgestellt werden. Ansonsten wird zur Kommunikationsphase übergegangen. Nach einer vorbestimmten Anzahl von erfolglosen Identifikationsversuchen bzw. nach einer bestimmten Zeit wird das Verfahren abgebrochen und eine Fehlermeldung ausgegeben.

Vorteilhaft ist es, wenn in der Identifikationsphase die physikalische Schnittstelle, über welche die Kommunikation stattfindet, ermittelt wird und in der Kommunikationsphase die Kommunikation automatisch über die identifizierte Schnittstelle aufgenommen wird. So kann bei Geräten mit zwei oder mehr Schnittstellen auf die manuelle Anpassung der tatsächlich benutzten physikalischen Schnittstelle verzichtet werden.

Vorteilhaft wird somit aus der Struktur der empfangenen Daten auf die Art des verwendeten Datenübertragungsprotokolls geschlossen. Dabei sind die zur Identifikation des Protokolls dienenden charakteristischen Merkmale vorbestimmte Bitmuster, charakteristische Startsequenzen, Prüfsequenzen und/oder charakteristische Zusammenhänge zwischen bestimmten Telegrammkomponenten und der Telegrammlänge. Die vorbestimmten Bitmuster oder charakteristischen Startsequenzen sind beispielsweise in einer Datenbank abgelegt, wobei das empfangene Datentelegramm bzw. Abschnitte davon mit den hinterlegten Sequenzen verglichen wird. Wird eine Übereinstimmung festgestellt, so ist dies ein Hinweis dafür, dass die Kommunikation auf dem Bus mit dem Protokoll erfolgt, welches den charakteristischen Merkmalen zugeordnet ist bzw. diese aufweist. Entsprechend kann anhand charakteristischer Zusammenhänge zwischen bestimmten Telegrammkomponenten und der Telegrammlänge auf das verwendete Datenübertragungsprotokoll geschlossen werden, indem beispielsweise aus der Länge des empfangenen Datentelegramms unter Annahme eines bestimmten Datenübertragungsprotokolls Telegrammkomponenten berechnet werden und mit den tatsächlich empfangenen entsprechenden Komponenten verglichen werden. Wird hier eine Übereinstimmung festgestellt, ist dies ebenfalls ein Hinweis, dass das tatsächlich verwendete Protokoll mit dem zur Berechnung herangezogenen Protokoll übereinstimmt.

Nach der ersten Identifikationsphase kann sich eine Testphase anschließen, in der weiterhin die Kommunikation auf den Bus beobachtet sowie geprüft wird, ob die Datenstruktur mit dem in der ersten Phase identifizierten Datenbus bzw. Datenübertragungsprotokoll übereinstimmt. Werden hier Abweichungen festgestellt, so wird erneut die Identifikationsphase eingeleitet, treten keine Abweichungen auf, so wird die Kommunikation unter Verwendung des identifizierten Protokolls aufgenommen.

Vorzugsweise sind wenigstens zwei verschiedene Protokolle, darunter insbesondere Profibus PA, Foundation Field-Bus, CAN, SDS und World FIP, identifizierbar und einstellbar. Prinzipiell können jedoch beliebige Busprogramme ausgewählt werden, sofern nur ihre charakteristischen Merkmale identifizierbar sind und darauffolgend auf das verwendete Busprogramm zurückgegriffen werden kann. Das Busprogramm muß daher in der Vorrichtung zur Durchführung des Verfahrens gespeichert sein und spätestens zu Beginn der Kommunikationsphase installiert werden.

Vorzugsweise wird das Verfahren nach jeder Kommunikationspause welche länger als eine vorprogrammierbare Dauer ist, automatisch durchgeführt. Dadurch werden Änderungen des Datenübertragungsprotokolls z.B. nach einer Umkonfigurierung des Kommunikationsnetzwerkes automatisch erfaßt und das busfähige Gerät daran angepaßt.

Zur Durchführung des Verfahrens kann eine Vorrichtung in beliebige busfähige Geräte eingefügt sein und paßt die Datenstruktur dieses Geräts an das von anderen Geräten innerhalb des Kommunikationsnetzwerks bereits verwendete Datenübertragungsprotokoll an. Sie kann auch als transportables Analysegerät zur Analyse und Überwachung des Busverkehrs verwendet werden. Vorteilhaft ist insbesondere, dass Hersteller von busfähigen Geräten bei Integration der erfindungsgemäßen Vorrichtung in derartige Geräte nunmehr lediglich einen Typ Gerät produzieren und vorrätig halten müssen, anstatt für sämtliche verwendete Datenübertragungsprotokolle ein spezifisch ausgelegtes Gerät zur Verfügung zu stellen.

Kurzbezeichnung der Zeichnung, in der zeigen:
- Figur 1: ein Ablaufdiagramm des erfindungsgemäßen Verfahrens zur automatischen Anpassung von busfähigen Geräten an das von einer sendenden Station verwendete Datenübertragungsprotokoll
- Figur 2: schematisch ein Blockdiagramm einer erfindungsgemäßen Vorrichtung 5 zur automatischen Erkennung von Kommunikationsprotokollen auf einem Bussystem 1
- Figur 3: schematisch ein Blockdiagramm einer Vorrichtung mit der zusätzlichen Möglichkeit der Identifzierung und Auswahl der physikalischen Schnittstelle, über welche die Kommunikation stattfindet und
- Figur 4: schematisch den Aufbau eines Detektierungsbausteins 4' gemäß der Figur 3.

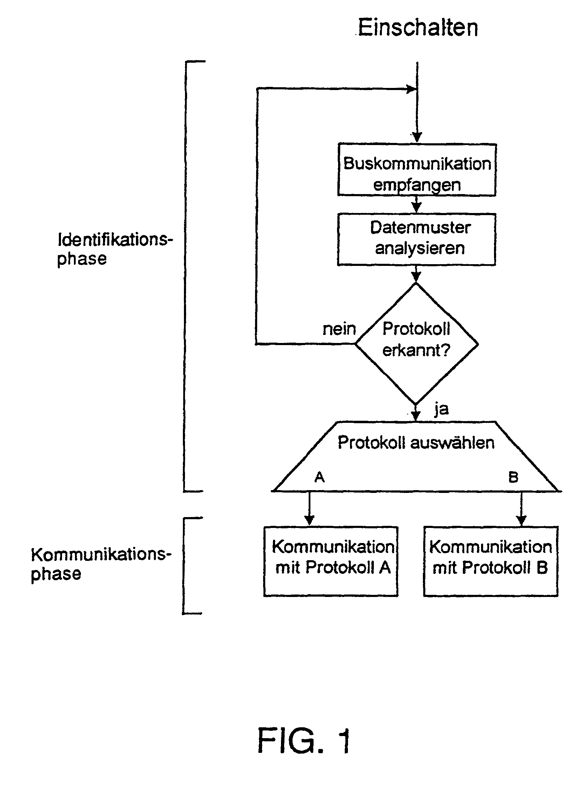

Figur 1 zeigt ein Ablaufdiagramm des erfindungsgemäßen Verfahrens zur automatischen Anpassung von busfähigen Geräten an das von einer sendenden Station verwendete Datenübertragungsprotokoll.

Das Verfahren wird durch Einschalten des busfähigen Geräts, in das die Vorrichtung zur Durchführung des Verfahrens integriert ist, oder durch Benutzereingabe, z.B. Tastendruck, gestartet. Die Vorrichtung befindet sich nun in einem ersten Zustand, in welchem die Buskommunikation beobachtet und analysiert wird. Diese Beobachtung- und Analysephase ist mit Identifikationsphase bezeichnet.

In der Identifikationsphase greift die Vorrichtung auf den Datenbus zu, d.h empfängt Datentelegramme, sendet jedoch noch keine und nimmt daher nicht an der Kommunikation auf dem Bus teil. Für den Bus bzw. weitere über diesen kommunizierende Geräte ist das busfähige Gerät, das sich in der Identifikationsphase befindet, noch passiv. Die empfangene Buskommunikation wird von der Steuereinheit der Vorrichtung analysiert. Beispielsweise wird geprüft, ob das empfangene Datentelegramm charakteristische Datenmuster, insbesondere Start- oder Endsequenzen, aufweist, welche auf ein bekanntes Datenübertragungsprotokoll hindeuten. Die Vorrichtung vergleicht dazu das empfangene Datentelegramm mit in einem Speicher hinterlegten, für ein gegebenes Protokoll charakteristischen Mustern. Fällt der Vergleich positiv aus, wurde das betreffende Protokoll erkannt und wird nun ausgewählt. Neben charakteristischen Sequenzen kann auch eine Prüfung auf charakteristische Zusammensetzung des empfangenen Datentelegramms stattfinden, beispielsweise einen charakteristischen Zusammenhang zwischen bestimmten Sequenzen und der Telegrammlänge. Die Prüfung läuft in diesem Fall beispielsweise derart ab, daß die Steuereinheit der Vorrichtung unter der Annahme eines bestimmten bekannten Protokolls zusammen mit bestimmten Eigenschaften des Datentelegramms diese charakteristischen Sequenzen ermittelt und mit den tatsächlich vorhandenen Sequenzen vergleicht. Wird eine Übereinstimmung festgestellt, so wurde das zur Bestimmung herangezogene Protokoll mit großer Wahrscheinlichkeit tatsächlich auf dem Bus verwendet. Das Protokoll wurde somit erkannt.

Zur Erhöhung der Erkennungsgenauigkeit kann eine Mehrzahl von Datentelegrammen im Hinblick auf charakteristische Datenmuster analysiert werden.

Gelingt keine Erkennung des verwendeten Datenübertragungsprotokolls, so wird die Analyse wiederholt und die Identifikationsphase erneut begonnen.

Gelingt die Identifikation des Protokolls, so schließt die automatische Auswahl und Installation des erkannten Busprogramms, hier Protokoll A oder B, die Identifikationsphase ab. Aus einem Speicher wird aus einer Mehrzahl von möglichen bekannten Busprogrammen das bereits von weiteren, an den Bus angeschlossenen Geräten verwendete ausgewählt und geladen.

In der sich an die Identifikationsphase anschließenden Kommunikationsphase nimmt das Gerät die Kommunikation über den Bus mit dem identifizierten Datenübertragungsprotokoll A bzw. B auf. Wurde die Entscheidung für eines der auswählbaren Protokolle A oder B einmal getroffen, so verhält sich die erfindungsgemäße Vorrichtung bis zum erneuten Start des Verfahrens wie ein bekanntes busfähiges Gerät, bei welchem das verwendete Protokoll dauerhaft festgelegt ist. Die Kommunikation mit dem Protokoll A oder B erfolgt dann in bekannter Weise.

Durch Ausschalten des Geräts wird die Festlegung auf eines der Protokolle A oder B gelöscht, und das Verfahren wird beim Einschalten erneut durchgeführt. Das Gerät kann allerdings auch so ausgelegt sein, daß das Verfahren nur auf Eingabe der Bedienungsperson mit der Identifikationsphase eingeleitet wird und ansonsten die Kommunikationsphase mit dem zuletzt erkannten und ausgewählten Protokoll durchgeführt wird.

Weiterhin kann nach dem Einschalten mit dem zuletzt erkannten Protokoll direkt in die Prüf-/Testphase übergegangen werden. Nur bei einer Nichtübereinstimmung zwischen dem zuvor bestimmten und dem aktuell beobachteten Protokoll wird die Identifikationsphase eingeleitet. Ansonsten nimmt das Gerät die Kommunikation mit dem zuvor bestimmten und in der Testphase bestätigten Protokoll auf.

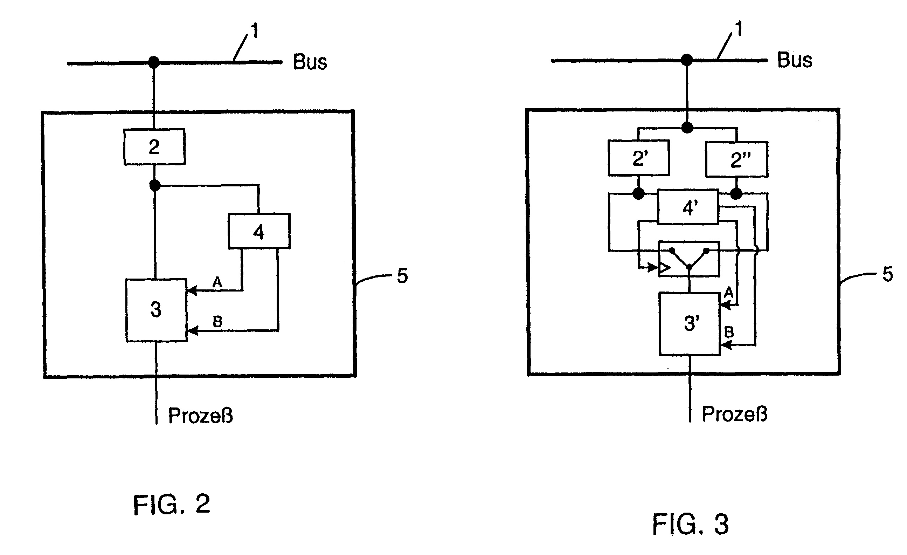

Figur 2 zeigt schematisch ein Blockdiagramm einer erfindungsgemäßen Vorrichtung 5 zur automatischen Erkennung von Kommunikationsprotokollen auf einem Bussystem 1. Die Vorrichtung 5 weist eine physikalische Schnittstelle 2 zum Anschluß an den Datenbus 1 auf, über welche die von der Systemsteuerung 3 kommenden Daten auf den Bus gegeben werden. Die Systemsteuerung 3 ist dabei beispielsweise ein Mikroprozessor, der die Prozeßdaten in ein bestimmtes Übertragungsformat entsprechend dem auf dem Datenbus verwendeten Kommunikationsprotokoll bringt.

Erfindungsgemäß ist an die physikalische Schnittstelle 2 ein Detektierungsbaustein 4 angeschlossen, der die über die Schnittstelle 2 übertragenen Daten beobachtet und aus ihrer Struktur das verwendete Protokoll ermittelt. Das ermittelte Protokoll A oder B wird der Systemsteuerung mitgeteilt, die daraufhin automatisch das entsprechende Busprogramm startet und die Kommunikation mit diesem identifizierten Protokoll aktiv aufnimmt.

Figur 3 zeigt schematisch ein Blockdiagramm einer weiteren erfindungsgemäßen Vorrichtung 5', welche neben der automatischen Erkennung und Auswahl des Kommunikationsprotokolls A oder B imstande ist, auch die physikalische Schnittstelle 2', 2'', über welche die Kommunikation stattfindet, zu identifizieren und auszuwählen.

Die Schnittstellen 2', 2'' sind dabei untereinander parallel geschaltet. Der Detektierungsbaustein 4' teilt der Systemsteuerung 3' die Kennung der identifizierten Schnittstelle mit, welche daraufhin über einen Umschalter 6 lediglich diese Schnittstelle zur Kommunikation ansteuert.

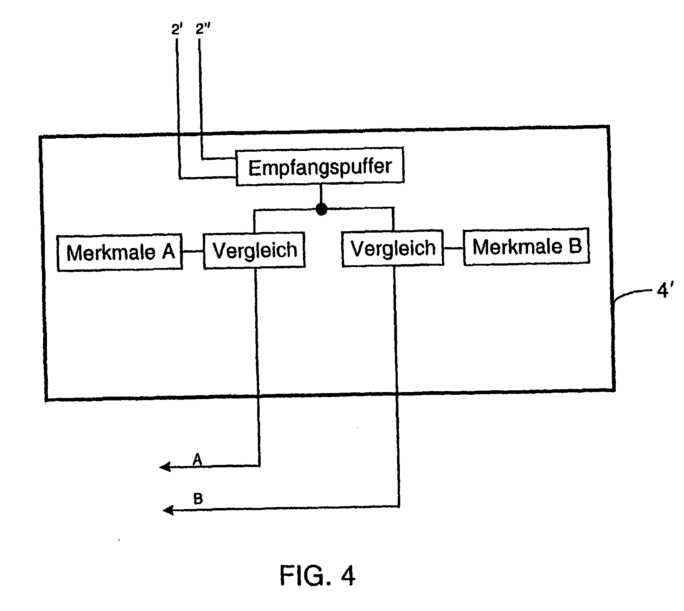

Figur 4 zeigt schematisch den Aufbau eines Detektierungsbausteins 4' gemäß Figur 3. Von den angeschlossenen Schnittstellen 2', 2'' kommende Daten werden in einen gemeinsamen Empfangspuffer geschrieben. Die Daten werden daraufhin nach Merkmalen des Kommunikationsprotokolls A bzw. B analysiert, z.B. indem sie mit vorbestimmten Datensequenzen verglichen werden. Falls der Vergleich positiv ausfällt, ist das Protokoll A bzw. B identifiziert, und es wird ein entsprechendes Identifizierungssignal erzeugt und zur Systemsteuerung 3' übertragen.

### Gewerbliche Anwendbarkeit.

Der Gegenstand der Erfindung ist insbesondere in der Automatisierungsindustrie und Fabrikautomatisation zur automatischen Anpassung von busfähigen Geräten an das in einem Kommunikationsnetzwerk verwendete Datenübertragungsprotokoll gewerblich anwendbar. Dort stellt die Erfindung insbesondere einen flexiblen, universellen und bedienerfreundlichen Einsatz von busfähigen Geräten sicher.

## Patentansprüche

1. Verfahren zur automatischen Anpassung von busfähigen Geräten an das von einer sendenden Station verwendete Datenübertragungsprotokoll, bei welchem in einer ersten Phase, der Identifikationsphase, die Kommunikation bzw. Datenstruktur auf dem Bus beobachtet und die Art des verwendeten Protokolls ermittelt wird, wobei Datentelegramme empfangen und hinsichtlich charakteristischer Merkmale analysiert werden, und danach in einer Kommunikationsphase die Kommunikation mit der sendenden Station und/oder die Datenauswertung unter Verwendung des identifizierten Protokolls aufgenommen wird,
**dadurch gekennzeichnet, dass** sich an die Identifikationsphase eine Testphase anschließt, in welcher die Kommunikation bzw. Datenstruktur auf dem Bus beobachtet und geprüft wird, ob die Datenstruktur mit dem in der Identifikationsphase identifizierten Datenübertragungsprotokoll übereinstimmt, wobei die Identifikationsphase wiederaufgenommen wird, falls in der Testphase Abweichungen der empfangenen Datenstruktur von der Soll-Datenstruktur bei Verwendung des identifizierten Datenübertragungsprotokolls festgestellt werden, und ansonsten zur Kommunikationsphase übergegangen wird.

2. Verfahren nach Anspruch 1, **dadurch gekennzeichnet,**
**dass** die zur Identifikation des Protokolls dienenden charakteristischen Merkmale vorbestimmte Bitmuster, charakteristische Startsequenzen und/oder charakteristische Zusammenhänge zwischen bestimmten Telegrammkomponenten und der Telegrammlänge sind.

3. Verfahren nach Anspruch 1 oder 2, **dadurch gekennzeichnet,**
**dass** in der Kommunikationsphase automatisch eine Auswahl aus bekannten Busprogrammen getroffen ist.

4. Verfahren nach einem der vorangegangenen Ansprüche, **dadurch gekennzeichnet,**
**dass** wenigstens zwei verschiedene Protokolle, darunter Profibus PA, Foundation Field Bus, World FIP, CAN und SDS, automatisch identifiziert und eingestellt werden.

5. Verfahren nach einem der vorherigen Ansprüche, **dadurch gekennzeichnet,**
**dass** in der Identifikationsphase die physikalische Schnittstelle, über welche die Kommunikation stattfindet, ermittelt wird und in der Kommunikationsphase die Kommunikation über die identifizierte Schnittstelle stattfindet.

6. Verfahren nach Anspruch 1, **dadurch gekennzeichnet,**
**dass** die Protokollidentifikation in einem Detektierungsbaustein (4, 4') erfolgt.

## Claims

1. A method for automatically adapting bus devices to the data transmission protocol being used by a transmitting station, in which, during a first phase, namely, the identification phase, the communication or data structure on the bus is observed and the type of protocol being used is ascertained, a process in which data telegrams are received and analyzed in terms of characteristic features, and subsequently, during a communication phase, the communication with the transmitting station and/or the data evaluation using the identified protocol are initiated,
**characterized in that** the identification phase is followed by a test phase during which the communication or data structure on the bus is observed and a checking procedure ascertains whether the data structure matches the data transmission protocol identified during the identification phase, a process in which the identification phase is started up again if it is ascertained that the received data structure deviates from the target data structure during the test phase when the identified data transmission protocol is used and otherwise, a transition is made to the communication phase.

2. The method according to Claim 1, **characterized in that**
the characteristic features that serve to identify the protocol are predetermined bit patterns, characteristic starting sequences and/or characteristic relationships between specific telegram components and the telegram length.

3. The method according to Claim 1 or 2, **characterized in that**,
during the communication phase, a selection is automatically made among known bus programs.

4. The method according to one of the preceding claims, **characterized in that**
at least two different protocols, including Profibus PA, Foundation Field Bus, World FIP, CAN and SDS, are automatically identified and set.

5. The method according to one of the preceding claims, **characterized in that**,
during the identification phase, the physical interface via which the communication takes place is ascertained and, during the communication phase, the communication takes place via the identified interface.

6. The method according to Claim 1, **characterized in that**
the protocol identification takes place in a detection module (4, 4').

## Revendications

1. Procédé d'adaptation des stations de bus à un protocole de transmission des données utilisé par une station de transmission, avec lequel, dans une première phase, la phase d'identification, la communication ou la structure des données est observée sur le bus et le type de protocole utilisé est déterminé, des télégrammes de données étant reçus et analysés en vue de leurs caractéristiques distinctives, et ensuite, dans une phase de communication, la communication avec la station de transmission et/ou l'analyse des données a lieu en faisant appel au protocole identifié,
**caractérisé en ce que**,
à la phase d'identification succède une phase de test dans laquelle la communication ou la structure de données est observée et contrôlée pour assurer que la structure de données concorde avec le protocole de transmission des données identifié dans la phase d'identification, la phase d'identification étant reprise au cas où l'on constate dans la phase de test des écarts dans la structure de données reçue par rapport à la structure de données consignée en ayant recours au protocole de transmission des données identifié, et sinon, on passe à la phase de communication.

2. Procédé selon la revendication 1, **caractérisé en ce que**
les caractéristiques distinctives servant à l'identification du protocole sont des configurations binaires prédéfinies, des séquences de lancement caractéristiques et/ou des rapports caractéristiques entre des composants de télégrammes définis et la longueur de télégramme.

3. Procédé selon l'une des revendications 1 ou 2, **caractérisé en ce que**
dans la phase de communication, une sélection parmi des programmes de bus connus s'opère automatiquement.

4. Procédé selon l'une des revendications précédentes,
**caractérisé en ce que**
au moins deux protocoles différents parmi lesquels Profibus PA, Foundation Field Bus, World FIP, CAN et SDS sont identifiés et réglés automatiquement.

5. Procédé selon l'une des revendications précédentes,
**caractérisé en ce que**,
dans la phase d'identification, l'interface physique via laquelle la communication a lieu est déterminée et, dans la phase de communication, la communication a lieu via l'interface identifiée.

6. Procédé selon la revendication 1, **caractérisé en ce que**
l'identification du protocole a lieu dans un module de détection (4, 4').
